# FASCICULE DE BREVET EUROPEEN

(11) **EP 0 704 959 B1**
(45) Date de publication et mention de la délivrance du brevet: **03.11.1999**
(21) Numéro de dépôt: 95410086.3
(22) Date de dépôt: 10.08.1995
(51) Int. Cl.: H02M 7/10, H02M 3/337, H02M 3/28, B05B 5/10

(54) **Procédé et dispositif d'élaboration de haute tension, notamment pour l'application électrostatique de produit de revêtement**
Verfahren und Vorrichtung zur Hochspannungserzeugung, insbesondere zur elektrostatischen Beschichtung
Method and device for high voltage generation, in particular for electrostatic application of coating material

(30) Priorité: 16.09.1994 FR 9411340
(43) Date de publication de la demande: 03.04.1996
(73) Titulaire: SAMES S.A., F-38243 Meylan Cédex (FR)
(72) Inventeur: Burtin, Jean Pierre, F-38120 Saint Egrève (FR); Dobrowolski, Flavien, F-38650 Sinard (FR); Thome, Caryl, F-38120 Saint Egrève (FR)
(74) Mandataire: Myon, Gérard Jean-Pierre

(56) Documents cités:
- EP-A- 0 160 179
- EP-A- 0 589 202

## Description

L'invention concerne un procédé et dispositif d'élaboration de haute tension, notamment pour l'application électrostatique de produit de revêtement, en particulier dans une installation de projection d'un tel produit liquide ou pulvérulent.

Dans de telles installations, qui peuvent être manuelles ou automatiques, une ou plusieurs électrodes portées à la haute tension doivent être alimentées électriquement pour créer un champ électrostatique entre le pulvérisateur et l'objet à revêtir. La tension fournie à une électrode est de l'ordre de plusieurs dizaines de kilovolts. Pour alimenter une électrode à partir du secteur ou de toute autre source de tension classique telle qu'une batterie d'accumulateurs, il est donc nécessaire d'augmenter sensiblement la tension disponible. Le courant est généralement limité à quelques milliampères pour raison de sécurité et pour limiter la puissance électrique consommée par l'électrode, cette puissance devant être partiellement dissipée sous forme de chaleur dans le dispositif.

Une contrainte essentielle des installations de revêtement par voie électrostatique réside dans le fait que le pulvérisateur est mobile et situé en un lieu généralement peu accessible et de faible volume, dans le cas d'une installation automatique, ou bien porté à bout de bras par un opérateur dans le cas d'une installation manuelle. Il est donc important que ce pulvérisateur soit léger et de faible encombrement. Pour augmenter la manoeuvrabilité du pulvérisateur, l'électrode est le plus souvent alimentée par deux sous-systèmes, l'un situé à poste fixe à proximité de l'installation et habituellement dénommé "unité basse tension", l'autre situé au contact du pulvérisateur et qui sera ici dénommé "redresseur élévateur de tension". Les deux unités sont connectées entre elles par un toron de câbles conducteurs.

Dans les systèmes connus de l'art antérieur, le signal électrique circulant dans le toron de câbles est périodique et, afin d'obtenir une tension de sortie maximale, on s'efforce de lui donner une fréquence proche de la fréquence de résonance du redresseur élévateur de tension. Cette fréquence de résonance peut être calculée en fonction du schéma électrique du redresseur élévateur de tension ou déterminée en cours de fonctionnement par mesure de la tension en aval du transformateur d'entrée du redresseur élévateur, ce qui permet de tenir compte des variations de cette fréquence de résonance d'un redresseur élévateur à l'autre et au cours du temps pour un même redresseur. La tension maximale de sortie détermine le point de fonctionnement du dispositif. De tels systèmes sont connus par exemple de FR-A-2 618 618 ou de US 5,159,544.

Or, le point de fonctionnement déterminé de cette manière ne tient pas compte du courant transitant dans le dispositif. Ce courant peut être important et induire des dissipations thermiques et des pertes fer/diélectrique importantes dans les enroulements des transformateurs. Il peut même conduire à la destruction de certains composants par effet Joule et mettre l'installation hors circuit.

Il est également connu du document EP-A-589 202 de faire varier la fréquence du signal alternatif de façon à minimiser le courant primaire, et du document EP-A-160 179 de faire varier la fréquence du signal alternatif de façon à maximiser l'efficacité du transformateur.

L'invention résout ce problème.

Elle concerne un procédé d'élaboration d'une haute tension, notamment pour l'application électrostatique de produit de revêtement, du type comprenant l'application à l'entrée d'un redresseur-élévateur de tension d'un signal périodique fourni par une unité basse tension, caractérisé en ce qu'il consiste à faire varier continûment la fréquence dudit signal périodique pour que le rapport de la puissance électrique en sortie dudit redresseur élévateur sur la puissance d'entrée de ladite unité basse tension soit maximum.

L'invention concerne aussi un dispositif générateur de haute tension, notamment pour alimenter un projecteur électrostatique d'un produit de revêtement, du type comprenant une unité basse tension dont la sortie est connectée à un redresseur-élévateur de tension auquel elle fournit un signal périodique caractérisé en ce qu'il comporte des moyens de pilotage de la fréquence dudit signal périodique en fonction du rapport de la puissance électrique en sortie dudit redresseur élévateur sur la puissance d'entrée de ladite unité basse tension.

Grâce au procédé et au dispositif de l'invention, à puissance de sortie déterminée, la puissance d'entrée est minimale. Le courant et la tension d'entrée sont optimum pour générer une tension et un courant de sortie suffisant sans pour autant risquer d'endommager le dispositif. De plus, grâce à l'invention, la fréquence du signal périodique est continûment ajustée de sorte que la puissance est optimale quels que soient le courant et la tension désirés et même si les conditions d'utilisation influent sur le comportement du dispositif, comme par exemple une longue utilisation qui peut conduire à un échauffement des composants et à une modification de leurs caractéristiques.

En particulier, un calculateur est utilisé pour déterminer la fréquence la mieux adaptée. Il procède à partir des valeurs du courant et de la tension d'alimentation de l'unité basse tension et du courant et de la tension dans le redresseur élévateur. Dans une variante de l'invention, toutes ces valeurs étant continues, la programmation et l'utilisation du calculateur sont simplifiées.

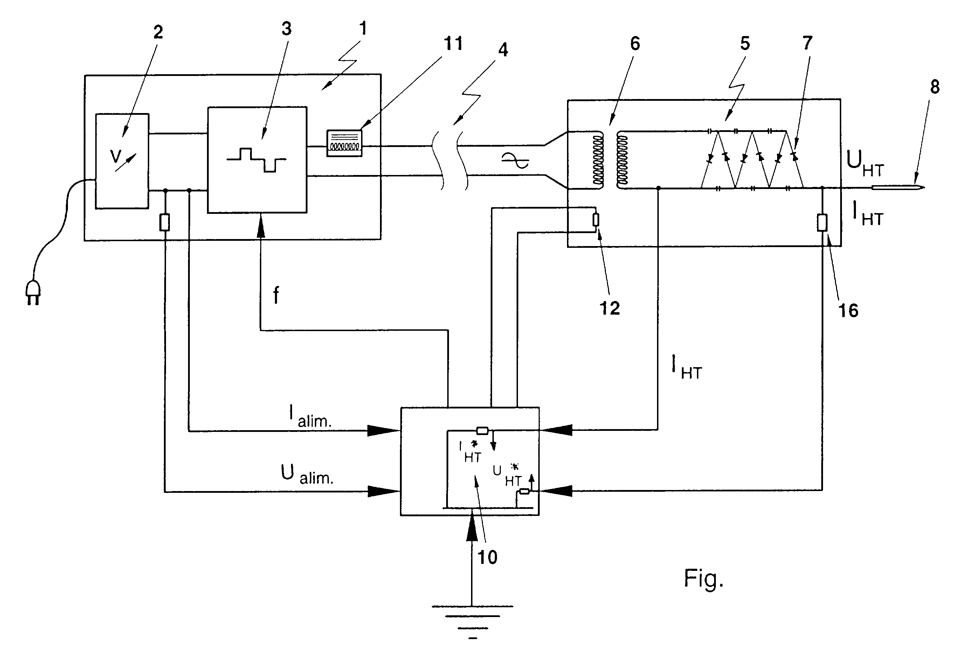

L'invention sera mieux comprise et d'autres avantages de celle-ci apparaîtront plus clairement à la lumière de la description qui va suivre d'un mode de réalisation d'un dispositif d'élaboration de la haute tension pour une installation de projection de produit de revêtement par voie électrostatique conforme à son principe donnée uniquement à titre d'exemple et faite en référence à la figure unique annexée

Dans le circuit de la figure, une unité basse tension 1 est essentiellement constituée par une alimentation stabilisée 1 connectée au secteur et délivrant un courant continu et une tension continue ajustable à un générateur 3 de courant électrique périodique de fréquence f pilotable en fréquence. L'alimentation stabilisée 2 pourrait aussi avoir pour source de courant une batterie d'accumulateurs ou toute autre source de courant. Le signal électrique périodique généré par l'unité basse tension 1 est un signal carré de forme constante minimisant les harmoniques de premier rang, c'est-à-dire une onde la plus proche possible d'une sinusoïde parfaite. Un filtre 11 permet de lisser partiellement ce signal. L'amplitude de cette onde est variable en fonction de la tension d'alimentation du générateur 3 par l'alimentation stabilisée 1. Bien que la forme du signal évoquée ci-dessus soit particulièrement avantageuse et simple à mettre en oeuvre, tout autre signal périodique permettrait de mettre en oeuvre l'invention, en particulier un signal sinusoïdal.

Le signal périodique issu de l'unité basse tension 1 est appliqué à travers un toron 4 de câbles conducteurs souples à l'entrée d'un redresseur élévateur de tension 5 comprenant un transformateur d'entrée 6 et un multiplicateur de tension 7. La sortie du multiplicateur de tension 7 est connectée à une électrode de charge 8 d'un projecteur électrostatique de produit de revêtement non représenté.

L'opérateur peut choisir de faire varier la tension délivrée à l'électrode en fonction des caractéristiques de projection souhaitées ou en fonction de la forme des objets à revêtir. Le courant varie aussi en fonction des effluves de haute tension au niveau de l'électrode qui dépendent de son environnement, par exemple de la distance de la masse la plus proche. La température des composants influe aussi sur leurs caractéristiques et donc sur la fréquence du signal périodique permettant d'obtenir une tension donnée. Pour toutes ces raisons, la fréquence f du signal périodique délivrée par le générateur 3 est pilotée par un calculateur 10.

Conformément à l'invention, le calculateur 10 détermine le rendement du dispositif générateur de haute tension constitué par l'unité basse tension 1 et le redresseur élévateur 5 comme étant le rapport de la puissance en sortie du redresseur 5 sur la puissance d'entrée de l'unité basse tension 1. Plus précisément, ces puissances sont calculées à partir des valeurs de la tension (U_{HT}) et du courant (I_{HT}) dans le redresseur élévateur 5 d'une part et de la tension (Uₐₗᵢₘ) et du courant (Iₐₗᵢₘ) d'alimentation de l'unité basse tension 1 d'autre part. La tension (U_{HT}) est mesurée en sortie du multiplicateur de tension 7 à proximité de l'électrode de charge 8. Sa valeur, représentative de la valeur de la haute tension disponible à l'électrode, est rendue mesurable à travers une résistance de mesure 16. La valeur ainsi obtenue, notée U_{HT}*, est une donnée d'entrée du calculateur 10. Le courant (I_{HT}) est mesuré en amont de la cascade dans un conducteur où circule aussi un courant alternatif issu du transformateur 6. La composante du courant circulant dans la ligne de mesure est continue puisqu'elle est égale au courant à l'électrode 6. Soit I_{HT}* cette valeur. Les valeurs continues U_{HT}* et I_{HT}* sont des images des grandeurs physiques à mesurer U_{HT} et I_{HT}, elles peuvent être traitées par le calculateur 10. On procède par incrément en faisant varier la fréquence de consigne délivrée par le calculateur 10 au générateur 3 et en maintenant le sens de l'incrément aussi longtemps que le rapport croît et en inversant le sens de l'incrément dès que ce rapport décroît.

Ainsi, à tension de sortie donnée par la consigne de l'opérateur, par exemple 80 kV, le courant est minimal, ce qui permet d'éviter une dissipation thermique dangereuse et des pertes fer/diélectrique importantes. A puissance de sortie du dispositif donnée, la puissance d'entrée est minimale. La consommation électrique du dispositif est ainsi minimale, ce qui présente un avantage économique non négligeable. En effet, certaines installations industrielles comptent un grand nombre de projecteurs de produits de revêtement et, par voie de conséquence, de dispositifs générateurs de haute tension associés. De plus, il devient courant d'alimenter certains dispositif générateurs de haute tension à partir de batteries d'accumulateurs, ce qui, dans le cas de projecteurs manuels améliore la maniabilité de l'appareil. La taille de ces batteries étant limitée, la maîtrise de la puissance consommée permet d'augmenter l'autonomie du projecteur.

Comme les valeurs de tension et de courant mesurées sont continues, le calculateur détermine la puissance par simple multiplication. Les incréments de fréquence peuvent être appliqués toutes les 200 millisecondes. L'invention est aussi applicable dans le cas où les grandeurs mesurées sont périodiques: le calculateur 10 fonctionne alors, comme cela est connu de l'homme du métier, en intégrant la différence de phase entre les tensions et les courants. Cependant, ceci nécessite un travail de programmation plus important et un calculateur plus puissant.

L'invention permet aussi de faire fonctionner une unité basse tension unique avec des redresseurs élévateurs de types différents. En effet, une résistance 12 est insérée dans tous les redresseurs élévateurs. Chaque type de redresseur-élévateur correspond à une valeur de résistance 12. La résistance 12 est connectée au calculateur 10 qui détermine sa valeur par une mesure classique de chute de tension. Lors du branchement du redresseur-élévateur 5 sur l'unité basse tension 1, la valeur de la résistance permet au calculateur d'identifier le type du redresseur-élévateur et de fixer le point de départ du processus d'incrémentation sur la valeur théorique de la fréquence permettant un rendement optimal. La valeur de la résistance permet donc de donner immédiatement au générateur 3 une valeur de consigne de fréquence f proche de la valeur optimale. Le processus d'incrémentation n'a lieu que sur une plage de fréquence réduite. La fréquence optimale est ainsi atteinte plus rapidement à chaque mise en service du dispositif, et en particulier lors du branchement du redresseur-élévateur 5 sur l'unité basse tension 1. Cette identification peut aussi servir pour des raisons de sécurité ou de vérification de compatibilité entre des appareils. La mesure de la valeur de la résistance 12 pourrait aussi être effectuée par une boucle de réaction à partir du générateur 3.

L'invention a été représentée avec l'unité basse tension 1 séparée du redresseur-élévateur 5 et reliée à celui-ci par un toron 4 de câbles souples mais elle s'applique aussi au cas où ces sous-ensembles font partie d'un système intégré ou compact.

## Revendications

1. Procédé d'élaboration d'une haute tension, notamment pour l'application électrostatique de produit de revêtement, du type comprenant l'application à l'entrée d'un redresseur-élévateur de tension (5) d'un signal périodique fourni par une unité basse tension (1), caractérisé en ce qu'il consiste à faire varier continûment la fréquence (f) dudit signal périodique pour que le rapport de la puissance électrique en sortie dudit redresseur élévateur sur la puissance d'entrée de ladite unité basse tension soit maximum.

2. Procédé selon la revendication 1, caractérisé en ce qu'il consiste à fournir, en entrée d'un calculateur (10) pilotant en fréquence ladite unité basse tension (1), la tension (U_{HT}) et le courant (I_{HT}) dans ledit redresseur-élévateur (5) d'une part et la tension (Uₐₗᵢₘ) et le courant (Iₐₗᵢₘ) d'alimentation de ladite unité basse tension d'autre part.

3. Procédé selon la revendication 1, caractérisé en ce qu'il consiste à faire varier la fréquence (f) de pilotage de ladite unité basse tension (1) par ledit calculateur (10) par incrément, à maintenir le sens de l'incrément aussi longtemps que ledit rapport croît et à inverser le sens de l'incrément dès que ledit rapport décroît.

4. Procédé selon la revendication 1, caractérisé en ce que toutes les grandeurs mesurées (U_{HT}*, I_{HT}*, Uₐₗᵢₘ,Iₐₗᵢₘ) pour déterminer ladite fréquence (f) dudit signal périodique sont continues.

5. Dispositif générateur de haute tension, notamment pour alimenter un projecteur électrostatique d'un produit de revêtement, du type comprenant une unité basse tension (1) dont la sortie est connectée à un redresseur-élévateur de tension (5) auquel elle fournit un signal périodique caractérisé en ce qu'il comporte des moyens (10) de pilotage de la fréquence (f) dudit signal périodique en fonction du rapport de la puissance électrique en sortie dudit redresseur-élévateur sur la puissance d'entrée de ladite unité basse tension.

6. Dispositif selon la revendication 5, caractérisé en ce qu'il comprend un calculateur (10) dont les entrées sont connectées pour mesurer la tension (U_{HT}) et le courant (I_{HT}) dans ledit redresseur élévateur (5) d'une part et la tension (Uₐₗᵢₘ) et le courant (Iₐₗᵢₘ) d'alimentation de ladite unité basse tension (1) d'autre part et dont les sorties sont connectées, entre autres, à ladite unité basse tension qu'il pilote en fréquence.

7. Dispositif selon la revendication 6, caractérisé en ce que les grandeurs physiques (U_{HT}*, I_{HT}*, Uₐₗᵢₘ, Iₐₗᵢₘ) fournies audit calculateur sont continues.

8. Dispositif selon la revendication 6, caractérisé en ce que ledit signal a une forme d'onde fixe minimisant les harmoniques de premier rang et une amplitude variable.

9. Dispositif selon la revendication 5, caractérisé en ce que ladite unité basse tension est apte à fonctionner avec des redresseurs-élévateurs de plusieurs types et en ce qu'il comporte des moyens (10,12) d'identification du type dudit redresseur-élévateur.

10. Dispositif selon la revendication 9, caractérisé en ce que lesdits moyens d'identification (10,12) déterminent la fréquence initiale dudit signal périodique lors de la mise en service du dispositif.

## Patentansprüche

1. Verfahren zur Erzeugung einer Hochspannung, insbesondere für die elektrostatische Aufbringung von Beschichtungsmaterial, derjenigen Art, bei der an den Eingang eines Gleichrichter-Spannungserhöhers ein von einer Niederspannungseinheit (1) geliefertes periodisches Signal angelegt wird,
**dadurch gekennzeichnet,**
daß es darin besteht, kontinuierlich die Frequenz (f) des periodischen Signals zu variieren, damit das Verhältnis der elektrischen Leistung am Ausgang des Gleichrichter-Erhöhers (5) zu der Eintrittsleistung der Niederspannungseinheit (1) maximal ist.

2. Verfahren zur Erzeugung einer Hochspannung nach Anspruch 1, dadurch gekennzeichnet, daß es darin besteht, den Eingang eines Rechners (10), der die Niederspannungseinheit (1) hinsichtlich der Frequenz steuert, die Spannung (U_{HT}) und den Strom (I_{HT}) in dem Gleichrichter-Erhöher (5) einerseits und die Versorgungsspannung (Uₐₗᵢₘ) und den Versorgungsstrom (Iₐₗᵢₘ) der Niederspannungseinheit andererseits zu liefern.

3. Verfahren zur Erzeugung einer Hochspannung nach Anspruch 1, dadurch gekennzeichnet, daß es darin besteht, die Frequenz (f) der Niederspannungseinheit (1) durch den Rechner (10) inkremental zu ändern, wobei das Vorzeichen des Inkrements so lange beibehalten wird, wie das Verhältnis steigt und das Vorzeichen des Inkrements umgekehrt wird, sobald das Verhältnis abnimmt.

4. Verfahren zur Erzeugung einer Hochspannung nach Anspruch 1, dadurch gekennzeichnet, daß alle gemessenen Größen (U_{HT}*, I_{HT}*, Uₐₗᵢₘ, Iₐₗᵢₘ) zur Bestimmung der Frequenz (f) des periodischen Signals Gleichgrößen sind.

5. Vorrichtung zur Erzeugung einer Hochspannung, insbesondere zur Versorgung eines elektrostatischen Projektors eines Beschichtungsmaterials des Typs, der eine Niederspannungseinheit (1) umfaßt, deren Ausgang mit einem Gleichrichtungs-Spannungserhöher (5) verbunden ist, dem ein periodisches Signal geliefert wird, dadurch gekennzeichnet, daß sie Mittel (10) zum Steuern der Frequenz (f) des periodischen Signals abhängig vom Verhältnis der elektrischen Leitung am Ausgang des Gleichrichter-Spannungserhöhers zu der Eingangsleistung der Niederspannungseinheit aufweist.

6. Vorrichtung zur Erzeugung einer Hochspannung nach Anspruch 5, dadurch gekennzeichnet, daß sie einen Rechner (10) umfaßt, dessen Eingänge verbunden sind, um die Spannung (U_{HT}) und den Strom (I_{HT}) in den Gleichrichter-Spannungserhöher (5) einerseits und die Versorgungsspannung (Uₐₗᵢₘ) und den Versorgungsstrom (Iₐₗᵢₘ) der Niederspannungseinheit (1) andererseits zu messen und dessen Ausgänge unter anderem mit der Niederspannungseinheit verbunden sind, die er bezüglich der Frequenz steuert.

7. Vorrichtung zur Erzeugung einer Hochspannung nach Anspruch 6, dadurch gekennzeichnet, daß die physikalischen Größen (U_{HT}*, I_{HT}*, Uₐₗᵢₘ, Iₐₗᵢₘ), die dem Rechner geliefert werden, Gleichgrößen sind.

8. Vorrichtung zur Erzeugung einer Hochspannung nach Anspruch 6, dadurch gekennzeichnet, daß das Signal eine feste Wellenform, die die harmonischen 1. Ordnung minimiert, und eine variable Amplitude aufweist.

9. Vorrichtung zur Erzeugung einer Hochspannung nach Anspruch 5, dadurch gekennzeichnet, daß die Niederspannungseinheit dazu geeignet ist, mit Gleichrichter-Erhöhern mehrerer Typen zu arbeiten und daß sie Mittel (10, 12) zum Identifizieren des Typs des Gleichrichter-Erhöhers aufweist.

10. Vorrichtung zur Erzeugung einer Hochspannung nach Anspruch 9, dadurch gekennzeichnet, daß die Mittel (10, 12) zum Identifizieren die Anfangsfrequenz des periodischen Signals bei der Inbetriebnahme der Vorrichtung bestimmen.

## Claims

1. Method of generating a high voltage, in particular for the electrostatic application of a coating material, of the type comprising the application to the input of a voltage step-up rectifier (5) of a periodic signal supplied by a low-voltage unit (1), characterized in that it consists in continuously varying the frequency (f) of the said periodic signal so that the ratio of the electrical power output by the said step-up rectifier to the input power of the said low-voltage unit is a maximum.

2. Method according to Claim 1, characterized in that it consists in supplying, as input to a computer (10) driving the frequency of the said low-voltage unit (1), the voltage (U_{HT}) and the current (I_{HT}) in the said step-up rectifier (5) on the one hand and the voltage (Uₛᵤₚₚₗ) and the current (Iₛᵤₚₚₗ) for powering the said low-voltage unit on the other hand.

3. Method according to Claim 1, characterized in that it consists in varying the drive frequency (f) of the said low-voltage unit (1) via the said computer (10) by increment, in maintaining the direction of the increment for as long as the said ratio is increasing and in reversing the direction of the increment as soon as the said ratio decreases.

4. Method according to Claim 1, characterized in that all the measured quantities (U_{HT}*, I_{HT}*, Uₛᵤₚₚₗ, Iₛᵤₚₚₗ) for determining the said frequency (f) of the said periodic signal are continuous.

5. Device for generating high voltage, in particular for powering an electrostatic sprayer of a coating material, of the type comprising a low-voltage unit (1) whose output is connected to a voltage step-up rectifier (5) to which it supplies a periodic signal, characterized in that it comprises means (10) for driving the frequency (f) of the said periodic signal as a function of the ratio of the electrical power output by the said step-up rectifier to the input power of the said low-voltage unit.

6. Device according to Claim 5, characterized in that it comprises a computer (10) whose inputs are connected so as to measure the voltage (U_{HT}) and the current (I_{HT}) in the said step-up rectifier (5) on the one hand and the voltage (Uₛᵤₚₚₗ) and the current (Iₛᵤₚₚₗ) for powering the said low-voltage unit (1) on the other hand and whose outputs are connected, among other things, to the said low-voltage unit whose frequency it drives.

7. Device according to Claim 6, characterized in that the physical quantities (U_{HT}*, I_{HT}*, Uₛᵤₚₚₗ, Iₛᵤₚₚₗ) supplied to the said computer are continuous.

8. Device according to Claim 6, characterized in that the said signal has a fixed waveform which minimizes the first-order harmonics and a variable amplitude.

9. Device according to Claim 5, characterized in that the said low-voltage unit is able to operate with step-up rectifiers of several types and in that it comprises means (10, 12) of identification of the type of the said step-up rectifier.

10. Device according to Claim 9, characterized in that the said identification means (10, 12) determine the initial frequency of the said periodic signal when the device is put into service.
